(19) **Europäisches Patentamt**

**European Patent Office**

**Office européen des brevets**

(11)  **EP 1 030 531 A1**

(12) **EUROPEAN PATENT APPLICATION**

(43) Date of publication:
**23.08.2000 Bulletin 2000/34**

(51) Int. Cl.⁷: **H04Q 7/38**, G01S 1/04,
G01S 5/02

(21) Application number: **00301025.3**

(22) Date of filing: **09.02.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **17.02.1999 US 251500**

(71) Applicant:
**LUCENT TECHNOLOGIES INC.
Murray Hill, New Jersey 07974-0636 (US)**

(72) Inventors:
• **Hua Chen, Byron
Whippany, New Jersey 07981 (US)**
• **Ching Chiang, Tung
Berkeley Heights, New Jersey 07922 (US)**
• **Freidenfelds, John
Madison, New Jersey 07940 (US)**
• **Tekin, Ibrahim
Randolph, New Jersey 07869 (US)**

(74) Representative:
**Buckley, Christopher Simon Thirsk et al
Lucent Technologies (UK) Ltd,
5 Mornington Road
Woodford Green, Essex IG8 0TU (GB)**

(54)  **Method for combining multiple measurements to determine the position of a mobile transceiver**

(57)  Information obtained from one or multiple base stations is used to calculate a mobile terminal's location in a cellular system based on combining multiple estimated locations. The estimated locations are averaged using a weighted sum, where the weights reflect the quality of information or data that produced the estimated location. The estimated locations are based on information such as time difference of arrival (TDOA), time of arrival (TOA), and angle of arrival (AOA). The round-trip delay (RTD) provides TOA information, and the pilot strength measurement messages (PSMM) contain the TDOA information, AOA information and the ID of base stations that provide signals to the mobile terminal.

FIG. 5

**EP 1 030 531 A1**

**Description**

**Background of the Invention**

**1. Field of the Invention**

The invention relates to cellular systems; more particularly to determining the location of a mobile station in the cellular system.

**2. Description of the Prior Art**

Location services are becoming more and more important in cellular systems and are used in applications such as emergency 911 calls and location based billing. In the past, single methods of determining a mobile station's position have been used; however, using a single method often results of ambiguities or errors. For example, in Code Division Multiple Access systems (CDMA) a time difference of arrival (TDOA) measurement is used to determine a hyperbola along which the mobile may be located. This is calculated using the phase or chip offset of pilot signals received from two different base stations by a mobile terminal. A chip is a time period that corresponds to one bit time of the spreading code used to spectrally spread the pilots transmitted by the base stations. An offset in the expected position of the spreading code results from the time delay from the transmitting base station to the mobile terminal and is measured in chips or bit periods of the spreading code. Using this information, the hyperbola is defined along which the mobile station may be located. Unfortunately, this method is not always available because the terminal may not be able to receive a pilot signal from more than one base station.

**Summary of the Invention**

The present invention uses information obtained from one or multiple base stations to calculate a mobile terminal's location in a cellular system based on combining multiple estimated locations. In one embodiment, the estimated locations are averaged using a weighted sum, where the weights reflect the quality of information or data that produced the estimated location. The estimated locations are based on information such as time difference of arrival (TDOA), time of arrival (TOA), and angle of arrival (AOA). The round-trip delay (RTD) provides TOA information, and the pilot strength measurement messages (PSMM) contain the TDOA information, AOA information and the ID of base stations that provide signals to the mobile terminal.

**Brief Description of the Drawing**

FIG. 1 illustrates the region of possible locations of a mobile determined by signal and strength.
FIG. 2 illustrates the region of possible locations of a mobile determined by TDOA.
FIG. 3 illustrates the region of possible locations of a mobile determined by RTD.
FIG. 4 illustrates the points of possible locations of a mobile determined by the intersects of a hyperbola (representing TDOA) and a circle (representing RTD).
FIG. 5 illustrates within the intersection of the regions, the point that maximizes total distance.
FIG. 6 illustrates outside of the intersection of the regions, the point that minimizes total distance.
FIG. 7 illustrates the information of TDOA, TOA and AOA and the estimated locations when 3 base stations are visible.
FIG. 8 is an illustration of position determination using two pilots from two base stations.
FIG. 9 illustrates a plot of BS1 and BS2 sectors with angles $\alpha$, $\beta$, $\gamma$.
FIG. 10 illustrates a plot of BS1 and BS 2 sectors with the angles.
FIG. 11 is an illustration of position determination using three or more pilots from two base stations.

**Detailed Description**

A mobile transceiver communicating with one or more base station transceivers has multiple sources of information from which its geographical position can be estimated. For example, location information can be derived from:

1. Signal and Strength

2. Angle of Arrival of the signal

3. Time of Arrival of the signal

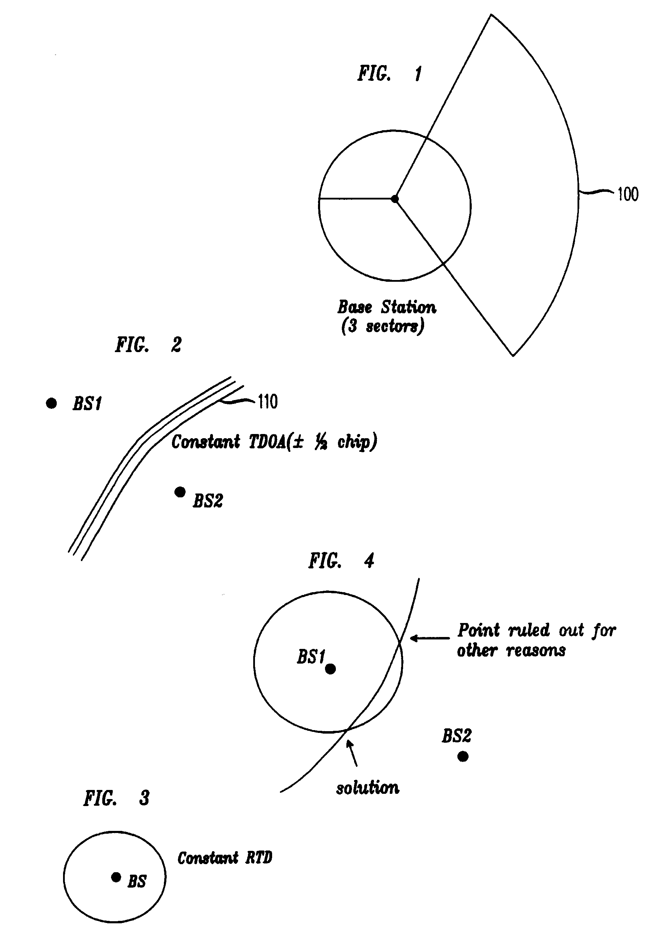

Due to practical limitations, the information available is generally noisy and incomplete. For example, Signal and Strength may only be useful for determining the base station sector in which the receiving mobile is located (pie-shaped region 100 in FIG. 1). Similarly, absolute time may not be known, but only the difference in the time of arrival (TDOA) of signals from two base stations - see FIG. 2, in which the region 100 represents the possible locations of a mobile that experiences a particular TDOA, but with a limited precision. Of course, in some cases the measurement may yield results that are more accurate. For example, Round Trip Delay (RTD) of a signal going from the base station and being returned by the mobile may yield a region that can be reasonably approximated by the points on the circle of FIG. 3.

The general process is to find the point (or points) which is "most representative" of all of the relevant regions. In the simplest case, this may be just the intersection of two lines as shown in FIG. 4, in which the region representing measured TDOA is taken to be a hyperbola, and the region representing Round Trip Delay is taken to be a circle.

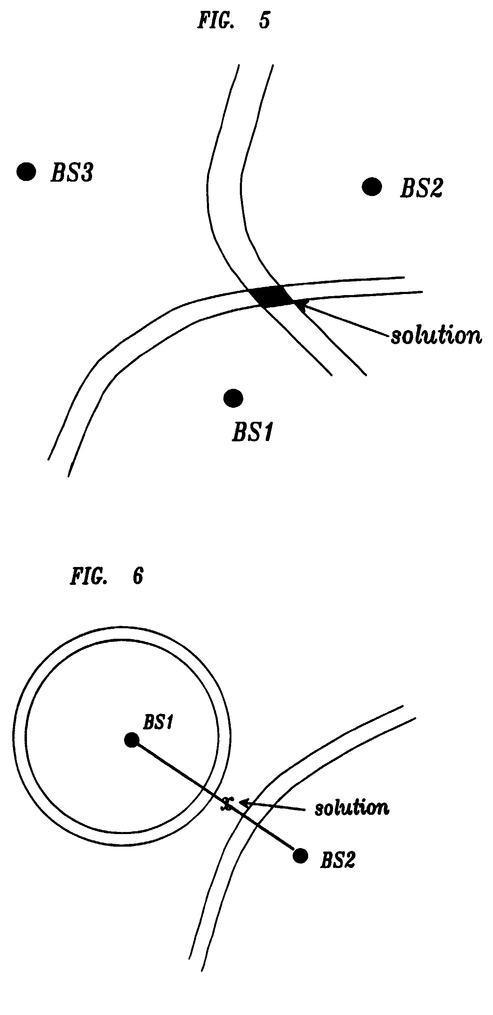

In a more complex situation, there may be multiple points that are within all of the regions, (FIG. 5). The chosen point then might be the point whose total distance from the boundaries of the regions is maximized (i.e., the point that is most interior to the intersection of the regions). Or, there may be no points that are simultaneously in all of the regions (FIG. 6). Then the chosen point might be one that minimizes the total distance to all of the regions.

In the general case, the most representative point is calculated by a mathematical optimization. The optimization process may use "penalty functions" that increases for points farther from the relevant regions - i.e., the penalty functions are designed to guide the selection as much as possible toward the most salient points in all of the regions simultaneously. The optimization process may, for example, use different weightings for the data from different regions to reflect quality of data, or known usefulness in predicting location.

It may also be desirable to determine multiple points that are relevant to the estimation of the location. For example, a particular set of radio measurements might be equally indicative of two different locations (see the point that was ruled out in FIG. 4). In that case it may be more useful to generate both points as candidate locations, than to strictly choose one of them, or to take some kind of average.

Although the methods described here are generally applied to estimating location from radio measurements, the same methods can be extended to incorporate other information from which location estimates may be derived. For example, if the mobile unit is known to be on a certain road, that road can be taken to be one of the relevant regions.

## Application in CDMA Systems

In a CDMA system, visibility means the number of base stations whose pilots are detectable by the mobile terminal.

In CDMA system, TDOA, RTD, and AOA are measured and are available, and may be averaged over time to improve the accuracy of location estimates based on these measurements.

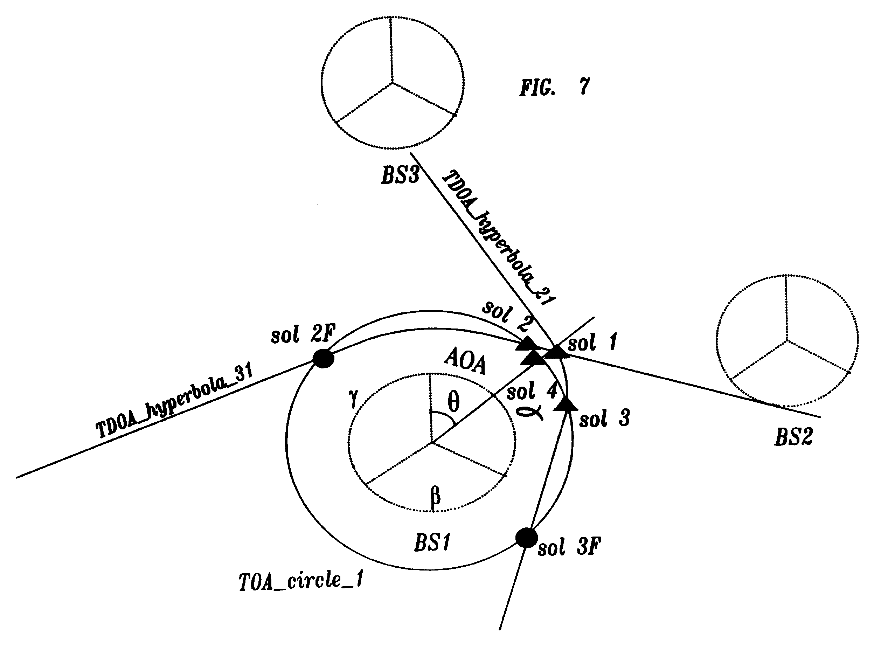

FIG. 7 depicts the information relevant to the estimation of a mobile's location in a cellular system. This information is categorized as TDOA, TOA and AOA. In CDMA systems, all this information may be obtained from RTD and PSMM which are available at the base station and/or mobile switching center. The contents of the RTD and PSMM are described below:

RTD - Contains the GPS time stamp, the round trip delay (RTD) measurement and the ID of the primary serving sector, from which TOA (time of arrival) is derived.

PSMM - Contains the GPS time stamp, pilot PN numbers, the pilot phases (or chip off-sets) that imply TDOA of pilots from other base stations versus the base station that contains the primary serving sector, and the pilot strengths from which AOA can be estimated.

It should be noted that PSMM does not always provide TDOA information. For instance, if a PSMM reporting pilots that come from a single base station, there is no TDOA information available. Whether TDOA information can be available is depending on how many base stations are visible (the pilots are detectable) at a particular mobile.

Due to imperfect synchronization among base stations, multipath propagation, chip rounding error in TDOA, various measurement errors, the location estimate based on TDOA, TOA and AOA do not converge to a unique estimate of mobile location in an (x,y) plane.

The meaning of each curve in FIG. 7 and their contribution in determining the mobile location are described below:

- The two hyperbolas (only half of each was drawn) TDOA_hyperbola_21 and TDOA_hyperbola_31: These are obtained using TDOA observed at a mobile. The intersection of the two hyperbolas, depicted as *sol1* in FIG. 7, indicates the possible mobile location. To be able to use this method to determine the mobile location, the visibility has to be >= 3.

- The circle TOA_circle_1: This is obtained using RTD available at the serving base station BS1. The intersects of TDOA_Hyperbola_31 and the TOA_circle_1 are the possible mobile locations, namely, *sol2* or *sol2*F. A procedure to exclude *sol2*F will be described in the next section. Likewise, the intersections of TDOA_Hyperbola_21 and the TOA_circle_1 also yield the possible mobile locations, namely, *sol3* or *sol3*F. If the pilot signal carries no noise and the measurement of it is made perfect, *sol2* and *sol3* should be coincident.

- The angle AOA θ: This is obtained using the ratio of strength of signals from adjacent sectors in the same base station, for example, α and γ sectors in BS1. The AOA θ can either be obtained at reverse link by measuring the power of the incoming signals at all sectors, or at be obtained at forward link by measuring the pilot strength from different sectors of the same base station. The former is called reverse link AOA (RLAOA) and the latter forward link AOA (FLAOA). The intersect of the AOA θ and the TOA_circle_1, *sol4*, gives the possible mobile location. It should be noted that AOA may also be calculated using the ratio of signal strength from adjacent sectors from each of one or more base stations.

The following paragraphs describe the mathematical expressions for the curves in FIG. 7 and how the information contained in RTD and PSMM is used in those mathematical expressions.

Assume the coordinates of the three base stations are $(x_1,y_1)$, $(x_2,y_2)$ and $(x_3,y_3)$, and the mobile coordinate is $(x,y)$. The distance between the mobile station and each of the base stations is calculated using,

$$d_1, = c \cdot t_1,$$

$$d_2 = c \cdot t_2, \tag{1}$$

$$d_3 = c \cdot t_3,$$

where $t_1$, $t_2$ and $t_3$ are the time it takes for the signals from BS1, BS2 and BS3 to reach the mobile, respectively, and c is the speed of light.

*TDOA_hyperbola_21 and TDOA_hyperbola_31, respectively:*

$$d_2 - d_1 = c \cdot (t_2 - t_1) = \sqrt{(x-x_2)^2 + (y-y_2)^2} - \sqrt{(x-x_1)^2 + (y-y_1)^2}, \tag{2}$$

$$d_3 - d_1 = c \cdot (t_3 - t_1) = \sqrt{(x-x_3)^2 + (y-y_3)^2} - \sqrt{(x-x_1)^2 + (y-y_1)^2}.$$

In a CDMA system,

$$d_2 - d_1 = c \cdot (t_2 - t_1) = c \cdot Phase2$$

$$d_3 - d_1 = c \cdot (t_3 - t_1) = c \cdot Phase3 \tag{3}$$

where *Phase*2 and *Phase*3 are the chip off-set of the second and third pilot that comes from BS2 and BS3, respectively, reported in the PSMM. The resolution of a pilot phase is in a chip (1 chip = 0.8138 μs) with CDMA standard IS-95.

$$d_1 = c \cdot (t_{receive} - t_{send})/2 = \sqrt{(x-x_1)^2 + (y-y_1)^2} \tag{4}$$

*TOA_Circle_1*

In a CDMA system,

$$d_1 = c \cdot (t_{receive} - t_{send})/2 = c \cdot RTD/2 \tag{5}$$

It should be noted with regard to Equations 4 and 5, that the receive times and send times do not include the processing delays associated with receiving and transmitting a signal, and therefore, reflect a distance that does not include an offset that results from the processing delays associated with the transmission and reception of a signal.

AOA $\theta$

$$\theta \approx \frac{dir1*(E_{c2}/I_0)+dir2*(E_{c1}/I_0)}{E_{c1}/I_0+E_{c2}/I_0} \tag{6}$$

In a CDMA system, $E_{c1}/I_0, E_{c2}/I_o$ are the strength of the pilots transmitted from the sectors reported in the PSMM in dB. The $dir1, dir2$ are the main beam directions of the sectors.

A process of location finding includes integrating the TDOA, TOA and AOA information by weighting the solution or estimated location ($sol_i$) determined using each type of information and then form a sum of the weighted solution as shown in Equation 7..

$$x = \sum_i w_{soli} x_{soli,}$$

$$y = \sum_i w_{soli} y_{soli,} \tag{7}$$

where $\Sigma w_{soli}=1$, $w_{soli}$ is dependent on visibility, and ($x_{soli}, y_{soli}$) is the ith solution or estimated position illustrated in FIG. 7.

The implementation of the process is related to visibility, i.e. the number of base stations that provide the information used to calculate a possible mobile location $sol_i$.

The weights are defined as follows:

if $sol_i$ is based on a visibility $\geq 3$, $W'_{soli} = 3$
if $sol_i$ is based on a visibility $=2$, $W'_{soli} = 2$
if $sol_i$ is based on a visibility $= 1$, $W'_{soli} = 1$

$W'_{soli}$ is normalized so that:

$$W_{soli} = \frac{W'_{soli}}{\sum_i W'_{soli}}$$

In reference to FIG. 7, since $sol1$ is obtained by using information from 3 base stations, $W_{sol1} = 3/8$. Since $sol2$ and $sol3$ are information from two base stations, $W_{sol2} = 2/8$ and $W_{sol3} = 2/8$. Since $sol4$ uses information from one base station, $W_{sol4} = 1/8$.

The rationale that the weight is made dependent on visibility is because the quality of the input, i.e. measurements of TDOA, TOA and AOA, are dependent on the visibility in a CDMA system. For instance, $sol4$ with input of AOA measurement (visibility = 1) is dependent on signal power, which is heavily affected by fading and shadowing and as a result should have a lower weight. Estimated locations $sol2$ and $sol3$ with input of TOA and TDOA (visibility =2) are dependent on round trip delay measurement which is affected by calibration of transmitting/receiving delay at the base station and the synchronization between the mobile and the base station are less prone to error and have a larger weight. Estimated location $sol1$ is solely dependent on TDOA (visibility = 3) which is less affected by the problems mentioned above and as a result is the least prone to errors and therefore has the largest weight.

When visibility =2, the mobile location (x,y) is obtained in a similar way as the case of visibility =3, except that there is no contribution from the intersection of two hyperbolas.

When visibility = 1, there is no choice but a single solution *sol4*.

When visibility is greater than there, more intersections are found among hyperbolas and circles. Nevertheless the visibility of an intersection of two hyperbolas is 3 and the visibility of an intersection of a hyperbola with a circle is 2. The only thing different is the denominator sum in the weighting coefficient, which equals 16 rather than 8 if visibility = 4.

### Procedure of excluding *sol2*F/ and *sol3*F

There are two intersection points between a hyperbola and a circle. In the procedure provided below, two cases will be considered. One of them is that mobile can only detect and measure two pilot signals from two distinct base stations, the other case is that the mobile can measure at least three different pilots from two distinct base stations.

### *Two Pilots from Two Base Stations*

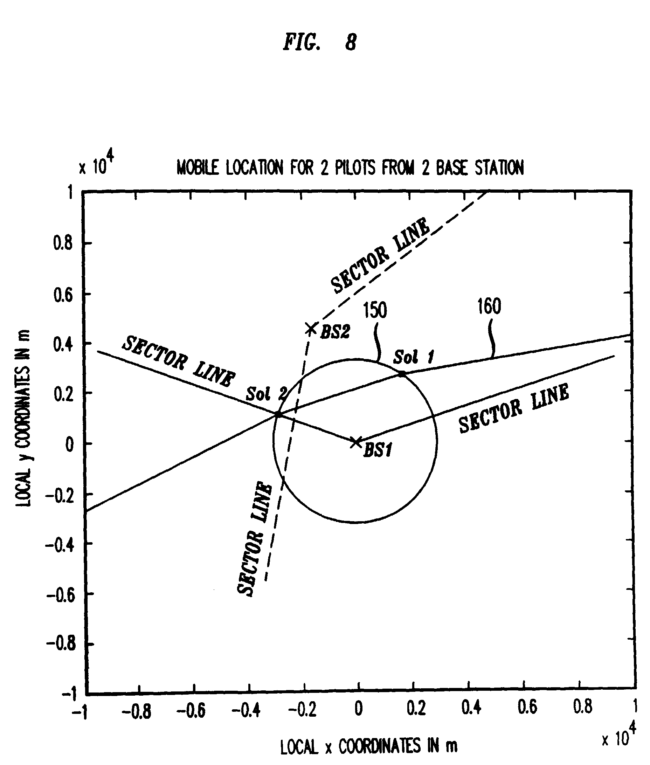

In CDMA systems, the distance of a mobile station to a base station can be calculated using the round trip delay measurement at the base station. Hence, the radius of the circle on which the mobile station is located becomes known. In addition, the mobile station measures the power levels and TDOA of several pilot signals for handoff purposes. For the case of only two visible pilots from two distinct cell sites, the TDOA measured by the mobile station defines the location of the mobile on one arm of a hyperbola. The intersection of the circle obtained from round trip delay measurement from the cell site and the hyperbola obtained from the measurement of TDOA at the mobile station generates two possible solutions for the mobile location. As illustrated in FIG. 8, the round trip delay was measured from Base station 1 (BS1) and it determined the radius of the circle 150 where the mobile was located. The TDOA of the pilot signal from BS2 pilot versus that of BS1 was measured at the mobile station and it determined the hyperbola 160.

The intersection of the circle and the hyperbola generates the two solutions, denoted Sol1 and Sol2 in FIG. 8. Of these two solutions, one can be chosen as the final solution using the sector information using the following rule:

$$Solution = \arg\{\min[\frac{|\alpha - \alpha_1|}{\gamma_1} + \frac{|\beta - \beta_1|}{\gamma_2}, \frac{|\alpha - \alpha_2|}{\gamma_1} + \frac{|\beta - \beta_2|}{\gamma_2}]\} \qquad (8)$$

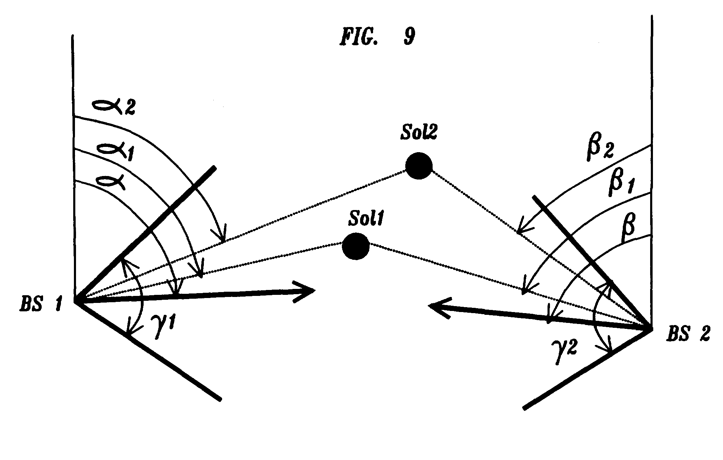

where the angles $\alpha_i, \beta_i, \gamma_i, i = 1,2$ are defined in FIG. 9. Equation 8 is simply the criteria for choosing one of the two solutions based on their closeness to the bisectors of BS1 and BS2. It should be noted that the solution to Equation 8 is equal to the location associated with the smaller of the two terms separated by a comma in Equation 8.

If Equation 8 is employed in the example given in FIG. 8, Sol1 is obtained as the final location of the mobile. Qualitatively, it is seen from FIG. 8 that Sol2 is out of the BS2 sector and also at the edge of the BS1 sector. Using this sector information, Sol1 can be chosen as the location of the mobile. A further explanation of why Sol1 is chosen is given as follows: should Sol2 be the solution, the mobile would have seen a pilot of another sector from either BS1 or BS2 since it is in the softer handoff region for both BS1 and BS2.

### *Three (or more) Pilots from Two Base Stations*

When the mobile detects a third pilot from either BS1 or BS2, it can be used to choose between the two solutions. The criteria of choosing one of the two possible solutions become different from the previous case. The rule for the three pilot case is:

$$Sol = \arg\{\min[\frac{\alpha_1}{\gamma_3}, \frac{\alpha_2}{\gamma_3}]\} \qquad (9)$$

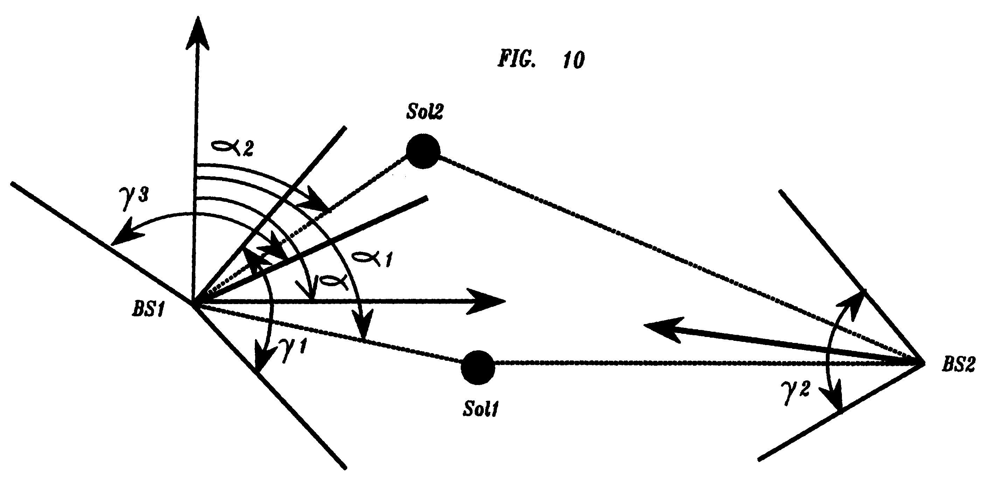

with the constraint that both Sol1 and Sol2 are in the sectors of BS1 and BS2 with beamwidths $\gamma_1, \gamma_2$. The angles $\alpha_1, \alpha_2, \gamma_3$ are defined in FIG. 10, which are measured from the bisector of the BS1 sector with beamwidth $\gamma_3$. It should be noted that the solution to Equation 9 is equal to the location associated with the smaller of the two terms separated by a comma in Equation 9.

In analogy to the two pilot case, Equation 9 is simply angular closeness measure of the two solutions to the bisector of BS1 sector with beamwidth $\gamma_3$. One can also apply the rule for two pilot case to the three pilot case. However, using the third pilot information will generate more reliable result since it is an independent measurement.

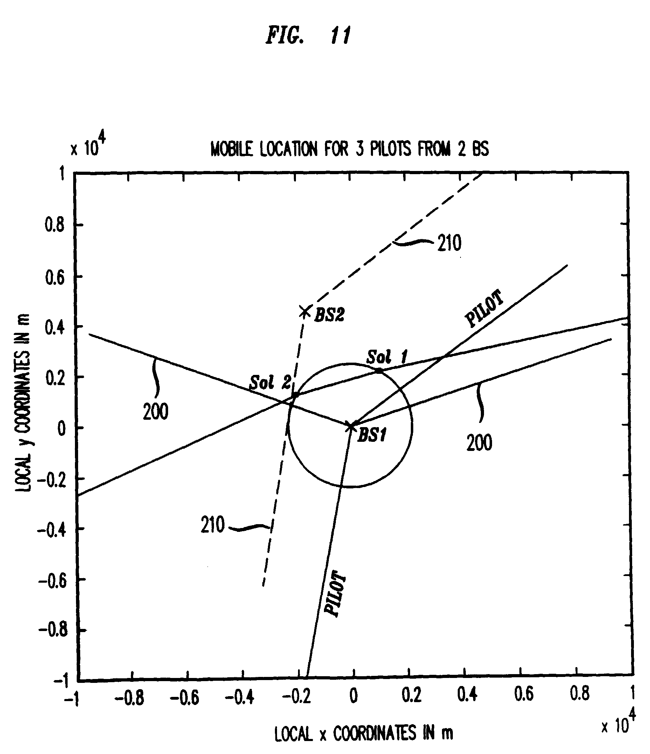

An example for three pilot case is plotted in FIG. 11. Both Sol1 and Sol2 are in the sectors of BS1 and BS2 (lines 200 and 210, respectively). Since the mobile detects two pilots from BS1, the final solution can be based on this third pilot. Once, Equation 9 is used to decide on the final solution, it is obtained as Sol1. Sol1 will be chosen as the final solution since it is more likely to see the third pilot signal from BS1 at location Sol1 than at Sol2.

## Application in TDMA Systems

The method can be applied to TDMA systems in a similar manner. To show how this can be done, the geolocation inputs are first reviewed, the differences between CDMA and TDMA in view of geolocation inputs are then discussed, and finally a one-to-one analogy between CDMA geolocation inputs and TDMA geolocation inputs are described.

### Geolocation Inputs Available in CDMA Systems

1. Identities of base stations seen by the mobile, represented by pilot PN numbers.
2. The pilot phase, which reflects relative time arrivals at the mobile, $phase_2=t_2-t_1$, $phase_3=t_3-t_1$, and so forth, where $t_1$ is the arrival time of the wave from base station 1, $t_2$ from base station 2, $t_3$ from base station 3, etc..
3. Location (latitude/longitude) of all base stations.
4. The round-trip delay measurements.
5. The pilot strength.

### Differences Between CDMA and TDMA in View of GeoLocation

- Base stations in TDMA are not synchronized as those in CDMA. For geolocation purpose, they should be synchronized using, for example, GPS (Global Positioning System) signals.
- Currently, a mobile in TDMA does not measure time arrival of signals from other base stations. It would be useful to have mobiles measure the time arrival of signals from other base stations.
- The power control in TDMA is not as stringent as that in CDMA, therefore signals from the mobile can be detected by multiple base stations.
- If the time arrival is measured at base stations, we may expect better location accuracy because of more accurate measurements from better detectors as compared with TDOA measurements characterized with a resolution of a chip in a CDMA forward link.

### Geolocation Inputs Required by Application in TDMA

If a synchronization scheme such as GPS synchronization is implemented at TDMA base stations, a mobile in TDMA can be located using the same method that we have developed for CDMA geolocation. An analogous list of inputs that will be used by TDMA geolocation is shown below:

1. Identity of the mobile requesting location service, represented by CDVCC (Coded Digital Verification Color Code. 8 original bits of DVCC plus 4 parity bits). The DVCC identifies the current traffic channel from co-channel and indicates that the correct data, rather than the co-channel data, is decoded. The CDVCC and signal strength of a particular mobile in handoff are measured by the Digital Locate Radios at the neighboring base stations if a base station is equipped with Lucent Technologies' PCS Minicell Growth Cabinet.
2. The relative time arrivals at the base stations, $phase_2=t_2-t_1$ and $phase_3=t_3-t_1$, and so forth, where $t_1$ is the arrival time of a particular CDVCC at base station 1, $t_2$ the arrival time at base station 2, and $t_3$ the arrival time at base station 3, etc..
3. Location (latitude/longitude) of all base stations.
4. The round-trip delay. It is measured continuously in TDMA for time alignment purpose.
5. The signal strength from the mobile is measured by the Digital Locate Radios at neighboring base stations for assistance of handoff.

**Claims**

1.  A method of determining a mobile terminals location in a wireless communication system, characterized by the steps of:

    obtaining a plurality of estimated mobile terminal locations;
    determining the mobile terminal's location by averaging at least two of the plurality of estimated mobile terminal locations.

2.  A method of determining a mobile terminals location in a wireless communication system, characterized by the steps of:

    obtaining a plurality of estimated mobile terminal locations;
    determining the mobile terminal's location using a weighted sum of at least two of the plurality of estimated mobile terminal locations.

3.  The method of claim 2, further characterized by the step of associating a weight with an estimated mobile terminal location, where the value of the weight is related to a number of wireless base stations used to obtain the estimated mobile terminal location.

4.  The method of claim 3, characterized in that a weight associated with an estimated mobile terminal location obtained from one base station is less than a weight associated with an estimated mobile terminal location obtained from more than one base station.

*FIG. 1*

100

**Base Station
(3 sectors)**

*FIG. 2*

● *BS1*

110

*Constant TDOA(± ½ chip)*

● *BS2*

*FIG. 4*

*BS1*●

*Point ruled out for
other reasons*

*BS2*
●

*solution*

*FIG. 3*

● *BS*

*Constant RTD*

## FIG. 5

BS3

BS2

solution

BS1

## FIG. 6

BS1

$x$ ← solution

BS2

FIG. 7

BS2

BS3

sol 1

sol 3

sol 3F

TDOA_hyperbola_21

sol 2

sol 4

γ

AOA

θ

β

BS1

γ

TOA_circle_1

sol 2F

TDOA_hyperbola_31

FIG. 8

MOBILE LOCATION FOR 2 PILOTS FROM 2 BASE STATION

FIG. 9

FIG. 10

*FIG. 11*

MOBILE LOCATION FOR 3 PILOTS FROM 2 BS

European Patent Office

**EUROPEAN SEARCH REPORT**

Application Number

EP 00 30 1025

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 10307 A (DUPRAY DENNIS JAY ;KARR CHARLES L (US)) 12 March 1998 (1998-03-12) * page 12, line 19 – page 13, line 12 * | 1,2 | H04Q7/38 G01S1/04 G01S5/02 |
| A | WO 98 34124 A (MOTOROLA INC) 6 August 1998 (1998-08-06) * column 9, line 47 – column 10, line 11 * | 1-4 | |

TECHNICAL FIELDS SEARCHED (Int.Cl.7)

H04Q
G01S

The present search report has been drawn up for all claims

| Place of search | Date of completion of the search | Examiner |
|---|---|---|
| THE HAGUE | 28 June 2000 | Weinmiller, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 030 531 A1

## ANNEX TO THE EUROPEAN SEARCH REPORT
## ON EUROPEAN PATENT APPLICATION NO.

EP 00 30 1025

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2000

| Patent document cited in search report | | Publication date | Patent family member(s) | | Publication date |
|---|---|---|---|---|---|
| WO 9810307 | A | 12-03-1998 | AU | 4338597 A | 26-03-1998 |
| | | | AU | 4479697 A | 26-03-1998 |
| | | | GB | 2337386 A | 17-11-1999 |
| | | | WO | 9810538 A | 12-03-1998 |
| WO 9834124 | A | 06-08-1998 | US | 5884215 A | 16-03-1999 |
| | | | AU | 5611998 A | 25-08-1998 |
| | | | BR | 9709149 A | 03-08-1999 |
| | | | CA | 2250236 A | 06-08-1998 |
| | | | CN | 1215474 A | 28-04-1999 |
| | | | EP | 0895600 A | 10-02-1999 |

EPO FORM P0459

For more details about this annex : see Official Journal of the European Patent Office, No. 12/82